# EUROPEAN PATENT SPECIFICATION

(11) **EP 2 148 114 B1**
(45) Date of publication and mention of the grant of the patent: **24.10.2012**
(21) Application number: 09008322.1
(22) Date of filing: 25.06.2009
(51) Int. Cl.: F16H 57/04

(54) **Lubricating apparatus and transmission equipped with the same**
Schmiervorrichtung und damit ausgestattetes Getriebe
Appareil de lubrification et transmission équipée de celui-ci

(30) Priority: 24.07.2008 JP 2008191445; 24.07.2008 JP 2008191446; 01.12.2008 JP 2008306536
(43) Date of publication of application: 27.01.2010
(73) Proprietor: Aichi Machine Industry Co. Ltd., Nagoya-shi, Aichi 456-8601 (JP)
(72) Inventor: Hada, Masatoshi c/o Aichi Machine Industry Co. Ltd., Nagoya-shi, Aichi 456-8601 (JP); Yoshioka, Hideji c/o Aichi Machine Industry Co. Ltd., Nagoya-shi, Aichi 456-8601 (JP); Sato, Motohiko c/o Aichi Machine Industry Co. Ltd., Nagoya-shi, Aichi 456-8601 (JP); Morita, Akihiro c/o Aichi Machine Industry Co. Ltd., Nagoya-shi, Aichi 456-8601 (JP); Nakadera, Hiroyuki c/o Aichi Machine Industry Co. Ltd., Nagoya-shi, Aichi 456-8601 (JP); Aoyama, Hideki c/o Aichi Machine Industry Co. Ltd., Nagoya-shi, Aichi 456-8601 (JP); Sawaki, Yasuhiro c/o Aichi Machine Industry Co. Ltd., Nagoya-shi, Aichi 456-8601 (JP)
(74) Representative: Weber, Joachim

(56) References cited:
- EP-A- 1 813 838
- JP-A- 2005 076 815
- JP-A- 2006 071 038

## Description

BACKGROUND OF THE INVENTION

The present invention relates to a lubricating apparatus, more particularly a lubricating apparatus for supplying a lubricating oil to a gear or other lubrication receiving member. Background Information

In a device that uses mechanical parts, it is sometimes necessary to supply a lubricating oil to the parts to suppress damage and wear of the parts. For example, a transmission having multiple gears is equipped with a lubricating apparatus for suppressing damage and wear of the gears. More specifically, a manual transmission for a vehicle has a plurality of gears and a case in which the gears are rotatably supported and housed. In order to lubricate the gears, the inside of the case is filled with a lubricating oil to such a level that a lower portion of the gears are immersed in the lubricating oil. When the gears rotate, the gear teeth contact the lubricating oil and a region where the gear teeth mesh is lubricated (e.g., see Japanese Laid-Open Patent Publication No. 2005-76815).

In view of the above, it will be apparent to those skilled in the art from this disclosure that there exists a need for an improved lubricating apparatus. This invention addresses this need in the art as well as other needs, which will become apparent to those skilled in the art from this disclosure.

### SUMMARY OF THE INVENTION

The transmission described in the above mentioned publication has an oil gutter provided inside the case to collect lubricating oil propelled upwardly by a gear. The lubricating oil collected by the oil gutter is guided to another gear by the oil gutter.

However, when there is more than one member requiring to be lubricated with the lubricating oil (lubricant requiring members), the oil gutter may not be able to deliver a sufficient amount of lubricating oil to the lubricant requiring members. In particular, when a lubricant requiring member is arranged in a position farther than the gear that picks up the lubricating oil, the oil gutter may not be able to deliver a sufficient amount of lubricating oil to the far away lubricant requiring member. Thus, there is a demand for a lubricating apparatus that can supply lubricating oil to a lubricant requiring member in a stable fashion.
EP 1 813 838 A discloses a transmission which has a rotating shaft, a coupling sleeve fixedly coupled to the rotating shaft to rotate with the rotating shaft and a variable speed gear mounted on the rotating shaft. The variable speed gear is configured to rotate on the rotating shaft when a clutch gear that is embedded in a side surface of the variable speed gear is disengaged from the coupling sleeve and to be fixed to the rotating shaft when the clutch gear is engaged from the coupling sleeve. The coupling sleeve is moved in the axial direction between the engaged and disengaged states by a shifting fork. A lubricant supplying structure directs lubricant to the clutch gear by diverting the lubricant against a side surface of the shifting fork that faces the clutch gear and a side surface of the coupling sleeve that faces the clutch gear.

The object of the present invention is to provide a lubricating apparatus that can achieve a more stable lubricating performance and a transmission that employs such a lubricating apparatus.
According to the invention, the object is solved by the features of the main claim. The sub-claims contain further preferred developments of the invention.

A lubricating apparatus according to one aspect of the invention is for supplying a lubricating oil propelled upwardly by a rotary member to a first lubricant requiring member and a second lubricant requiring member with the second lubricant requiring member being disposed in a position farther from the rotary member than the first lubricant requiring member. The lubricating apparatus includes a first guiding section and a second guiding section. The first guiding section has a first collecting section configured and arranged to collect at least a portion of the lubricating oil propelled upwardly by the rotary member. The first guiding section is configured and arranged to deliver the lubricating oil collected by the first collecting section to the first lubricant requiring member. The second guiding section has a second collecting section configured and arranged to collect at least a portion of the lubricating oil propelled upwardly by the rotary member. The second guiding section is configured and arranged to deliver the lubricating oil collected by the second collecting section to the second lubricant requiring member. The second collecting section is arranged in a position farther from the rotary member than the first collecting section in a radial direction of the rotary member.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a cross sectional schematic view of a transmission.

Figure 2 is a perspective view of a counter shaft and surrounding parts.

Figure 3 is a perspective view of the counter shaft and surrounding parts.

Figure 4 is a plan view of the counter shaft and surrounding parts.

Figure 5 is a side view of the counter shaft and surrounding parts.

Figure 6 is a perspective view of an oil gutter.

Figure 7 is a perspective view of the oil gutter.

Figure 8 is a plan view of the oil gutter.

Figure 9 is a side view of the oil gutter.

Figure 10 is a side view of the oil gutter.

Figure 11 is a side view of the oil gutter.

Figure 12 is a side view of the oil gutter.

Figure 13 is a schematic plan view of a holding member.

Figure 14 is a schematic perspective view of a first collecting section and a second collecting section.

Figure 15 is a cross sectional view taken along the section line XV-XV of Figure 5.

Figure 16 is a cross sectional view taken along the section line XVI-XVI of Figure 15.

Figure 17 is a side view of a counter shaft and surrounding parts according to another embodiment.

Figure 18 is a schematic perspective view of a first collecting section and a second collecting section according to another embodiment.

Figure 19 is a schematic plan view of a holding member according to another embodiment.

Figure 20 is a side view of a counter shaft and surrounding parts according to another embodiment.

Figure 21 is a side view of an oil gutter according to another embodiment.

Figure 22 is a side view of an oil gutter according to another embodiment.

Figure 23 is a side view of a counter shaft and surrounding parts according to another embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

### GENERAL DESCRIPTION OF TRANSMISSION

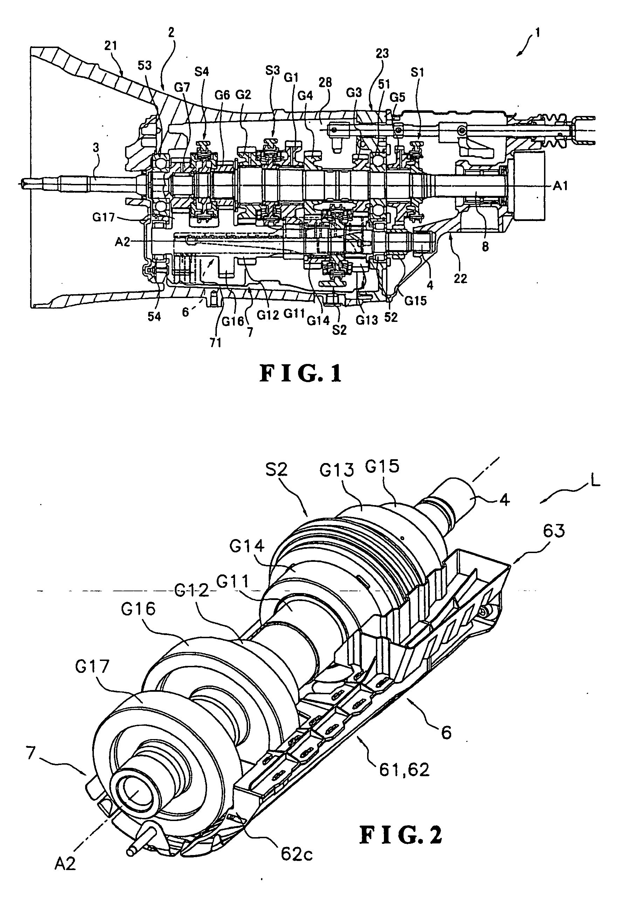

A transmission 1 will now be explained with reference to Figure 1. Figure 1 is cross sectional schematic view of the transmission 1. When the transmission 1 is mounted in a vehicle, the portion shown on the left-hand side of Figure 1 is positioned toward the front of the vehicle (example of a second side in an axial direction) and the portion shown on the right-hand side of Figure 1 is positioned toward the rear of the vehicle (example of a first side in an axial direction). In the following explanation, such directional terms as "front" and "frontward" are defined to refer to the direction corresponding to the leftward direction in Figure 1, and such directional terms as "rear" and "rearward" are defined to refer to the direction corresponding to the rightward direction in Figure 1. Also, since the vertical orientation of the transmission 1 in Figure 1 corresponds to the orientation assumed when the transmission 1 is installed in a vehicle, such directional terms as "vertical" and "transverse" refer to the vertical and transverse (left and right) directions of the transmission 1 when it is installed in a vehicle.

The transmission 1 is a six-speed manual transmission configured for an FR (front engine/rear-wheel drive) vehicle. As shown in Figure 1, the transmission 1 comprises chiefly a case 2, an input shaft 3, a countershaft 4, a main shaft 8, a plurality of gears G1 to G17, and a plurality of synchronizing mechanisms S1 to S4.

The case 2 has a first case 21, a second case 22 that is fixed to the first case 21, and an adapter plate 23 that is sandwiched between the first case 21 and the second case 22. The case 21, the second case 22, and the adapter plate 23 form a gear chamber 28. The gear chamber 28 is configured such that lubricating oil can be stored in a bottom portion thereof.

The input shaft 3 is arranged such that power generated by an engine (not shown) is transmitted thereto through a clutch device (not shown) and supported in the case 2 on a bearing 53 such that it can rotate about a rotational axis A1. A main drive gear G7 is provided on an end portion of the input shaft 3 such that it can rotate integrally with the input shaft 3.

The main shaft 8 serves as an output shaft for outputting power and is supported in the case 2 on a bearing 51 such that it can rotate about the rotational axis A1. A frontward end portion of the main shaft 8 is supported such that it can be rotated by the input shaft 3. A fourth speed main gear G4 and a third speed main gear G3 are fixed to the main shaft 8. The main shaft 8 supports a sixth gear main gear G6, a second speed main gear G2, a first speed main gear G1, and a reverse main gear G5 such that the gears can rotate relative thereto. The fourth synchronizing mechanism S4, the third synchronizing mechanism S3, and the first synchronizing mechanism S1 are also supported on the main shaft 8. The third synchronizing mechanism S3 serves to couple the first speed main gear G1 or the second speed main gear G2 to the main shaft 8. The fourth synchronizing mechanism S4 serves to couple the sixth speed main gear G6 or the main drive gear G7 to the main shaft 8. The first synchronizing mechanism S1 serves to couple the reverse main gear G5 to the main shaft 8.

The counter shaft 4 is supported in the case 2 on bearings 54 and 52 such that the counter shaft 4 can rotate about a rotational axis A2. A counter drive gear G17 (example of a second lubricant requiring member), a sixth speed counter gear G16, a second speed counter gear G 12 (example of a first lubricant requiring member), a first speed counter gear G11, and a reverse counter gear G15 are fixed to the counter shaft 4. The counter shaft 4 supports a fourth speed counter gear G14 and a third speed counter gear G13 (example of a rotary member and a first rotary member) such that each of the fourth speed counter gear G14 and the third speed counter gear G13 can rotate relative to the counter shaft 4. The third counter gear G13 can contact the lubricating oil. The second synchronizing mechanism S2 (example of a rotary member and a first rotary member) is supported on the counter shaft 4 and serves to couple the third speed counter gear G 13 or the fourth speed counter gear G 14 to the counter shaft 4.

The first speed main gear G1 is arranged and configured to mesh with the first speed counter gear G 11 and is used when the vehicle is driven in a first speed (first gear). The second speed main gear G2 is arranged and configured to mesh with the second speed counter gear G12 and is used when the vehicle is driven in a second speed (second gear). The third speed main gear G3 is arranged and configured to mesh with the third speed counter gear G 13 and is used when the vehicle is driven in a third speed (third gear). The fourth speed main gear G4 is arranged and configured to mesh with the fourth speed counter gear G 14 and is used when the vehicle is driven in a fourth speed (fourth gear). The reverse main gear G5 is arranged and configured to mesh with the reverse counter gear G15 and is used when the vehicle is driven in reverse. The sixth speed main gear G6 is arranged and configured to mesh with the sixth speed counter gear G16 and is used when the vehicle is driven in a sixth speed (sixth gear).

The main drive gear G7 serves to transmit power from the input shaft 3 to the counter shaft 4 through the counter drive gear G17 and is arranged and configured to mesh with the counter drive gear G17. When the vehicle is driven in the fifth speed, the fourth synchronizing mechanism S4 connects the input shaft 3 and the main shaft 8 together directly.

The first speed main gear G1 and the first speed counter gear G11 are arranged further rearward than the second speed main gear G2 and the second speed counter gear G12. The third speed main gear G3, the third speed counter gear G13, and the second synchronizing mechanism S2 are arranged further rearward than the first speed main gear G1 and the first speed counter gear G11. A gear ratio of the second speed main gear G2 and the second speed counter gear G12 is smaller than a gear ratio of the first speed main gear G1 and the first speed counter gear G11. The main drive gear G7 and the counter drive gear G17 transmit power at least when the vehicle is driven in the first speed and when the vehicle is drive in the second speed. The counter drive gear G17 is arranged in a position (frontward end position) that is farther from the third speed counter gear G13 along an axial direction than any other gear.

### DETAILED DESCRIPTION OF TRANSMISSION

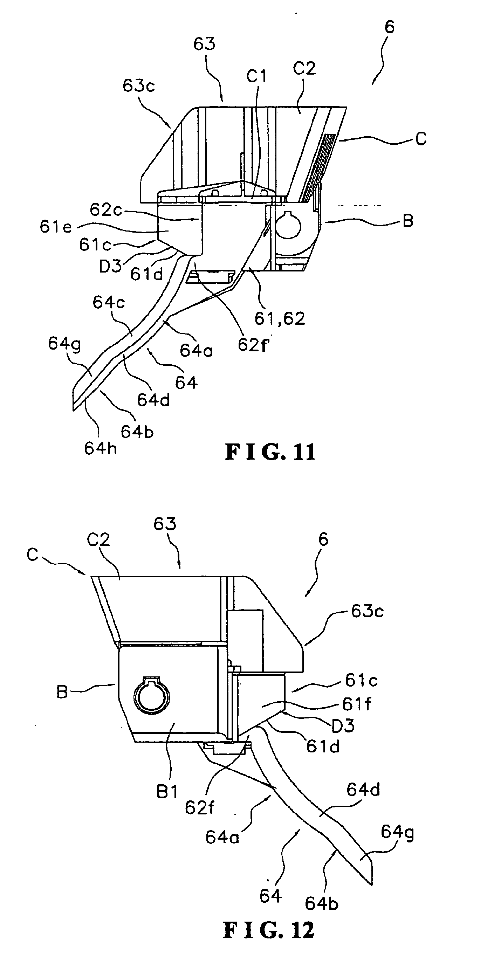

In order to help stabilize the lubricating performance, an oil gutter 6 and a gutter plate 7 are provided on the transmission 1. In this embodiment, the third speed counter gear G13 (which picks up lubricating oil as it rotates), the oil gutter 6, and the gutter plate 7 constitute the lubricating apparatus L. The oil gutter 6 and the gutter plate 7 will now be explained with reference to Figures 1 to 16.

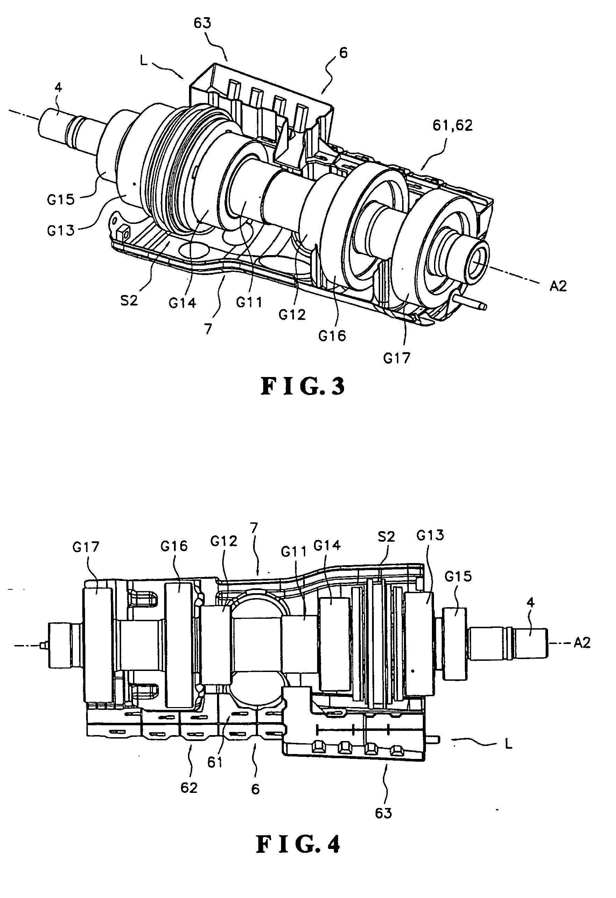

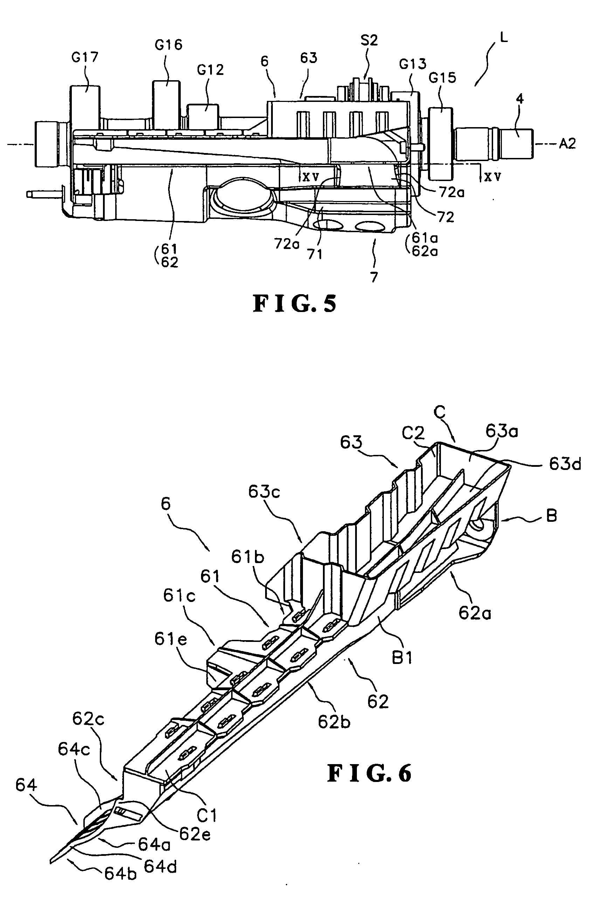

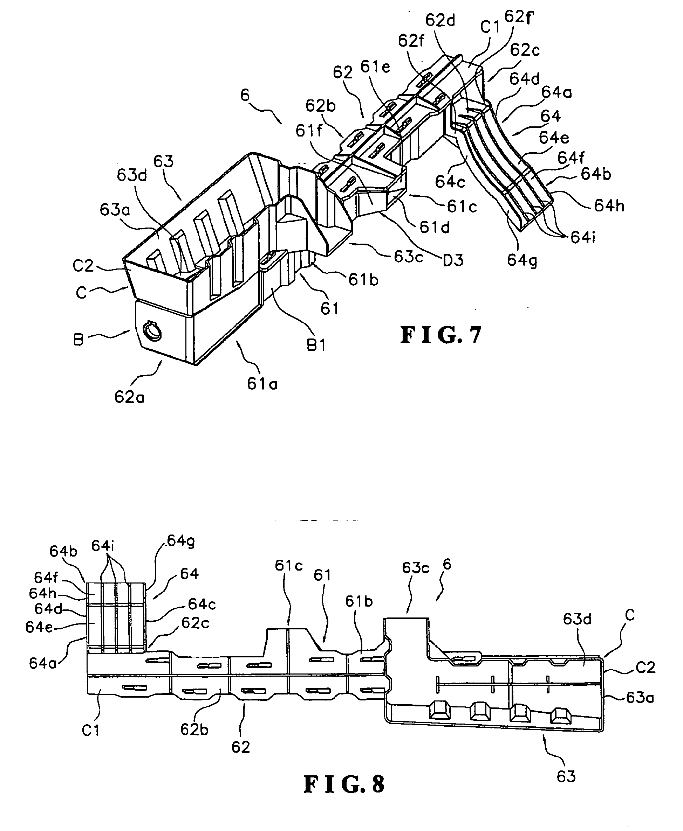

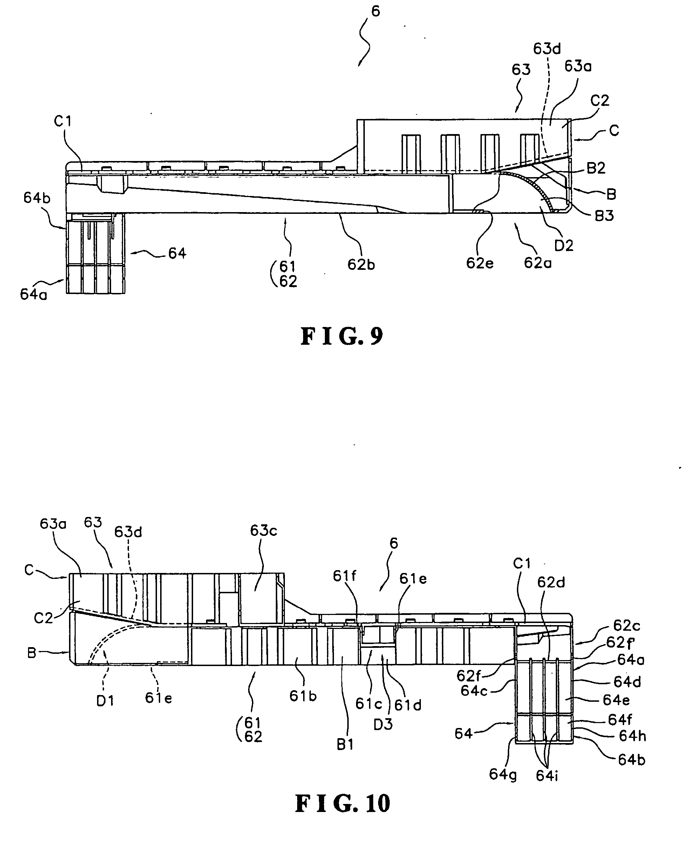

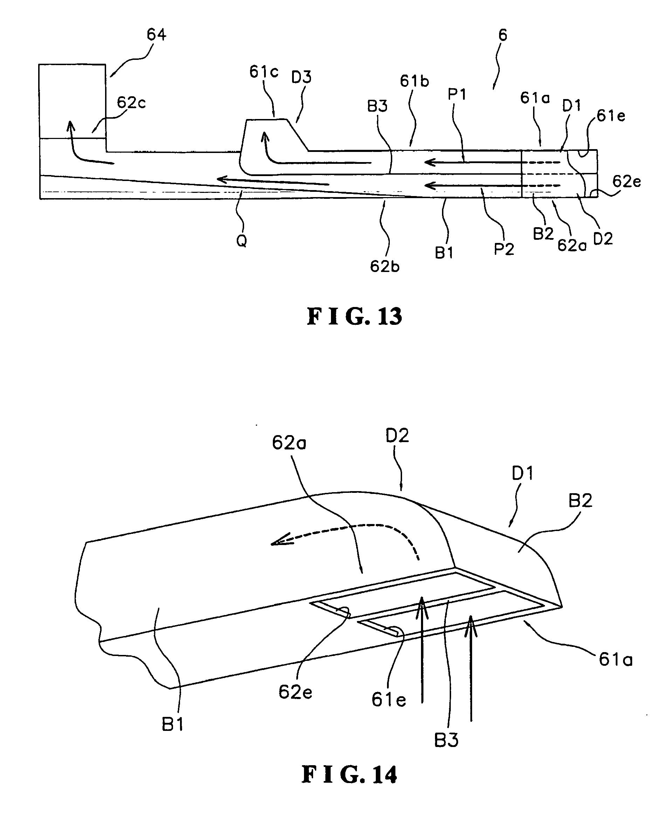

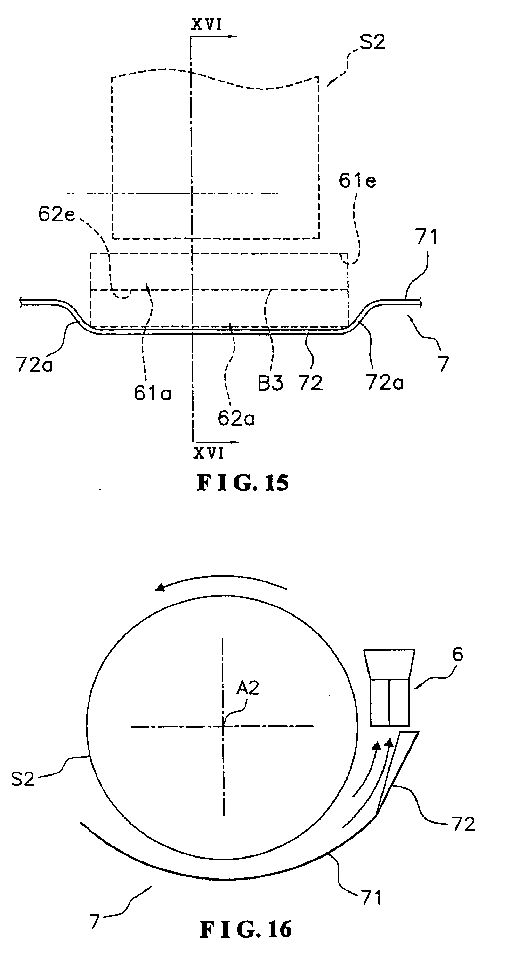

Figures 2 and 3 are perspective views of the counter shaft 4 and surrounding parts. Figure 4 is a plan view of the counter shaft 4 and surrounding parts. Figure 5 is a side view of the counter shaft 4 and surrounding parts. Figures 6 and 7 are perspective views of the oil gutter 6. Figure 8 is plan view of the oil gutter 6. Figures 9 to 12 are side views of the oil gutter 6. Figure 13 is a schematic plan view of a holding member B. Figure 14 is a schematic perspective view of a first collecting section 61a and a second collecting section 62a. The shape and structure of the oil gutter 6 are simplified in Figures 13 and 14. Figure 15 is a cross sectional view taken along the section line XV-XV of Figure 5. Figure 16 is a cross sectional view taken along the section line XVI-XVI of Figure 15.

### (1) OIL GUTTER 6

As shown in Figures 1 to 5, the oil gutter 6 is arranged along a side of the counter shaft 4 and serves to guide lubricating oil propelled upwardly by the third speed counter gear G 13 and the second synchronizing mechanism S2 to the counter drive gear G 17, the second speed counter gear G 12, and the first speed counter gear G11. A rearward end portion of the oil gutter 6 is fixed to, for example, an adapter plate 23. The oil gutter 6 is arranged on a side of the rotational axis A2 where lubricating oil is picked up and propelled upwardly by the counter drive gear G17 (i.e., a side where an outer circumferential portion of the counter drive gear G17 moves generally upward).

As shown in Figures 6 to 14, the oil gutter 6 comprises the holding member B and a lid member C and has a first guiding section 61, a second guiding section 62, and a third guiding section 63. The holding member B and the lid member C are made of, for example, a synthetic resin material and are formed as separate one-piece units. The lid member C is mounted onto the holding member B.

The holding member B has a holding member body B1, a curved section B2, and a partitioning plate B3. The lid member C has a bottom plate C1 and a side wall C2. Together, the sections of the holding member B and the lid member C form the first guiding section 61, the second guiding section 62, and the third guiding section 63. The first guiding section 61 and the second guiding section 62 are generally sealed by the lid member C. In this embodiment, "generally sealed" means there is substantially no leakage of the lubricating oil between an inlet and an outlet. Thus, "generally sealed" includes both a state in which the first and second guiding sections 61 and 62 are completely sealed except at a lubricating oil inlet and a lubricating oil outlet (i.e., a joint portion between the holding member B and the lid member C is completely sealed) and a state in which there is some leakage of lubricating oil from a joint portion between the holding member B and the lid member C but the amount of leakage is held to such a level that a desired lubricating performance can be ensured (e.g., a state in which a gap exists between the holding member B and the lid member C).

### 1) First Guiding Section

The first guiding section 61 is arranged and configured to capture at least a portion of lubricating oil that is propelled upwardly by the third speed counter gear G13 and supply the captured lubricating oil to the second speed counter gear G12. The first guiding section 61 has a first collecting section 61a, a first middle section 61 b, and a first discharging section 61c.

The first collecting section 61 a is arranged to the outside of the third speed counter gear G13 and the second synchronizing mechanism S2 with respect to a radial direction and serves to collect at least a portion of the lubricating oil propelled upwardly by the third speed counter gear G 13. The first collecting section 61a (more specifically, a first opening 61 e) is arranged to face toward (i.e., opposite) a direction in which the third speed counter gear G 13 picks up the lubricating oil. In this embodiment, since the first collecting section 61 a is arranged at substantially the same height as the rotational axis A2, the first opening 61e of the first collecting section 61 a faces substantially downward. The first collecting section 61 a is arranged in such a position that at least when the vehicle is driven in the first speed and when the vehicle is driven in the second speed, the first collecting section 61a is not immersed in the lubricating oil.

In the first collecting section 61 a, the flow direction of the lubricating oil is changed from an upward direction to an axially frontward direction. More specifically, the first collecting section 61 a is formed by the holding member body B1, the curved section B2, and the partitioning plate B3 with the first collecting section 61 a being generally sealed except for the inlet (i.e., the first opening 61e) and the outlet (i.e., a communication passage fluidly connected to the first middle section 61b). The curved section B2 is a plate-like portion curved such that it can change the flow direction of the lubricating oil to an axial direction. Consequently, the lubricating oil flows smoothly from the first collecting section 61 a to the first middle portion 61 b. In this way, a direction changing section D1 configured to change a flow direction of the lubricating oil is realized with the first collecting section 61 a.

The first middle section 61b joins the first collecting section 61a and the first discharging section 61c together. More specifically, the holding member body B1, the curved section B2, and the bottom plate C1 form the first middle section 61 b. Lubricating oil collected by the first collecting section 61a passes through the first middle section 61b and flows into the first discharging section 61c.

The first discharging section 61 c serves to discharge the lubricating oil collected by the first collecting section 61a toward the second speed counter gear G12. More specifically, the first discharging section 61c has a diagonal section 61d configured to extend diagonally upward so as to approach the third speed counter gear G13.

The first discharging section 61 c protrudes from the first middle section 61 b toward the second speed counter gear G12 and is arranged in close proximity to the second speed counter gear G12. The expression "the first discharging section 61c...is in close proximity to the second speed counter gear G12" includes the meaning of a state in which the first discharging section 61c is separated from the second speed counter gear G12 to such an extent that a desired lubricating performance can be ensured. An example of a feasible state of close proximity of the first discharging section 61c with respect to the second speed counter gear G12 is a state in which the shortest distance dimension between a tip end of the first discharging section 61c and a tip end of a tooth of the second speed counter gear G12 is approximately as small as a height of a tooth of the second speed counter gear G12. The first discharging section 61 c discharges lubricating oil generally along a rotation direction of the second speed counter gear G12 (i.e., in a direction that is not opposed to a rotation direction of the second speed counter gear G12). In this way, a direction changing section D3 configured to change a flow direction of the lubricating oil is realized with the first discharging section 61c.

The first discharging section 61 c also has a first rearward side wall 61f and a first frontward side wall 61e. The first rearward side wall 61f is a plate-like portion arranged on a rearward side of the diagonal section 61d and oriented to extend toward the second speed counter gear G12. The first frontward side wall 61e is a plate-like portion arranged on a frontward side of the diagonal section 61 d and oriented to extend toward the second speed counter gear G12. The first rearward side wall 61f extends toward the second speed counter gear G12 such that it draws closer to the first frontward side wall 61 e. In other words, a flow path of the first discharging section 61 c is slightly constricted. The diagonal section 61 d, the first rearward side wall 61 f, and the first frontward side wall 61e are thus configured to allow the lubricating oil to be discharged toward the second speed counter gear G12 more easily.

Thus configured, the first guiding section 61 forms a first flow path P1 that serves to guide lubricating oil propelled upwardly by the third speed counter gear G13 to the second speed counter gear G 12.

### 2) Second Guiding Section

The second guiding section 62 is arranged and configured to capture at least a portion of lubricating oil that is propelled upwardly by the third speed counter gear G13 and supply the captured lubricating oil to the counter gear G17. The second guiding section 62 has a second collecting section 62a, a second middle section 62b, a second discharging section 62c, and an extended section 64.

The second collecting section 62a is arranged to the outside of the third speed counter gear G 13 and the second synchronizing mechanism S2 with respect to a radial direction and serves to collect at least a portion of the lubricating oil propelled upwardly by the third speed counter gear G13. Similarly to the first collecting section 61a, the second collecting section 62a is arranged to face toward (i.e., opposite) a direction in which the third speed counter gear G13 picks up the lubricating oil. In this embodiment, since the second collecting section 62a is arranged at substantially the same height as the rotational axis A2, the second opening 62e of the second collecting section 62a faces substantially downward. The second collecting section 62a is arranged in such a position that at least when the vehicle is driven in the first speed and the second speed, the second collecting section 62a is not immersed in the lubricating oil. The first collecting section 61a and the second collecting section 62a are arranged adjacent to each other along a radial direction such that the second collecting section 62a is arranged to the outside of the first collecting section 61 a along the radial direction.

In the second collecting section 62a, the flow direction of the lubricating oil is changed from an upward direction to an axially frontward direction. More specifically, the holding member body B1, the curved section B2, and the partitioning plate B3 form the second collecting section 62a with the second collecting section 62a being generally sealed except for the inlet (i.e., the second opening 62e) and the outlet (i.e., a communication passage fluidly connected to the first middle section 62b). Consequently, the lubricating oil flows smoothly from the second collecting section 62a to the second middle portion 62b. In this way, a direction changing section D2 configured to change a flow direction of the lubricating oil is realized with the second collecting section 62a.

The second middle section 62b joins the second collecting section 62a and the second discharging section 62c together. More specifically, the holding member body B1, the curved section B2, and the bottom plate C1 form the second middle section 62b. Lubricating oil collected by the second collecting section 62a passes through the second middle section 62b and flows into the second discharging section 62c.

The second discharging section 62c serves to discharge the lubricating oil collected by the second collecting section 62a toward the counter gear G17. More specifically, the second discharging section 62c protrudes from the second middle section 62b toward the counter gear G17 and is arranged in close proximity to the counter gear G17. Unlike the first discharging section 61c, the second discharging section 62c protrudes substantially horizontally.

More specifically, the second discharging section 62c has a bottom plate 62d, a second rearward side wall 62f, and a second frontward side wall 62f. The bottom plate 62d protrudes toward the counter drive gear G17. The second rearward side wall 62f is a plate-like portion arranged on a rearward side of the bottom plate 62d and oriented to extend toward the counter drive gear G17. The second frontward side wall 62f' is a plate-like portion arranged on a frontward side of the bottom plate 62d and oriented to extend toward the counter drive gear G17. For example, the second rearward side wall 62f is formed as an integral unit with a first rearward side rib 64c (described later), and the second frontward side wall 62f' is formed as an integral unit with a first frontward side rib 64d (described later). The second rearward side wall 62f and the second frontward side wall 62f' are configured to allow the lubricating oil to be discharged toward the counter drive gear G12 more easily.

The second guiding section 62 is arranged in a position farther from the third speed counter gear G13 in a radial direction than the first guiding section 61. The second guiding section 62 has a portion Q (see Figure 13) between the second collecting section 62a and the counter drive gear G 17 in which a cross sectional area of a flow path becomes gradually smaller. More specifically, a portion of a side wall of the holding member body B1 is slanted such that a dimension between the partitioning plate B3 and the side wall of the holding member body B1 gradually decreases along the flow direction of the lubricating oil (see Figures 6, 9, and 11).

Thus configured, the second guiding section 62 forms a first flow path P2 that serves to guide lubricating oil propelled upwardly by the third speed counter gear G 13 to the counter drive gear G 17. The extended section 64 will be explained in more detail later.

### 3) Third Guiding Section

The third guiding section 63 is arranged above the first collecting section 61 a and the second collecting section 62a and is formed by the lid member C, the bottom plate C1, and the side wall C2. The third guiding section 63 collects lubricating oil that drips down from an upper portion of the case 2 and supplies the lubricating oil to the first speed counter gear G11. More specifically, the third guiding section 63 has a third collecting section 63a and a third discharging section 63c.

The third collecting section 63a serves to collect lubricating oil that drips from an upper portion of the case 2. The third discharging section 63c serves to supply lubricating oil collected by the third collecting section 63a to the first speed counter gear G11. The third discharging section 63c protrudes from the third collecting section 63a toward the first speed counter gear G11 and is arranged in close proximity to the first speed counter gear G11. The third discharging section 63c protrudes substantially horizontally from the third collecting section 63a.

The third collecting section 63a has a diagonal section 63d that slopes downward toward the third discharging section 63c with respect to a horizontal plane. The diagonal section 63d is configured to make the lubricating oil flow more readily toward the third discharging section 63c so that the lubricating oil is discharged more readily from the third discharging section 63c.

### 4) Extended Section

The extended section 64 of the second guiding section 62 will now be explained in more detail.

The extended section 64 has a first extended section 64a configured and arranged to extend downward from an end portion of the second discharging section 62c so as to follow along an outer circumferential portion of the counter drive gear G17 and a second extended section 64b arranged and configured to extend downward from an end portion of the first extended section 64a so as to separate from the counter drive gear G17.

The first extended section 64a is configured and arranged such that a gap dimension between the first extended section 64a and the counter drive gear G17 is substantially constant. The first extended section 64a has a first body section 64e, a first rearward side rib 64c (example of first side wall), and a first frontward side rib 64d (example of second side wall). The first body section 64e is arranged to face toward the counter drive gear G 17 along a radial direction.

The first rearward side rib 64c is arranged on a rearward side edge portion of the first body section 64e such that it protrudes radially inward toward the counter drive gear G 17 from the first body section 64e. The first rearward side rib 64c extends along the entire length of the first body section 64e in a circumferential direction so as to generally follow along the contour of an outer circumferential portion of the counter drive gear G17. The first rearward side rib 64c is arranged rearward of the counter drive gear G17. In this embodiment, a height of the first rearward side rib 64c is higher than a height of the first frontward side rib 64d.

The first frontward side rib 64d is arranged on a frontward side edge portion of the first body section 64e such that it protrudes radially inward toward the counter drive gear G 17 from the first body section 64e. The first frontward side rib 64d extends along the entire length of the first body section 64e in a circumferential direction so as to generally follow along the contour of an outer circumferential portion of the counter drive gear G17.

The second extended section 64b has a second body section 64f, a second rearward side rib 64g (example of first side wall), and a second frontward side rib 64h (example of second side wall). The second body section 64f extends diagonally downward from an end portion of the first extended section 64a such that it gradually separates from the third speed counter gear G13.

The second rearward side rib 64g is arranged on a rearward side edge portion of the second body section 64f such that it protrudes radially inward toward the counter drive gear G17 from the second body section 64f. The second rearward side rib 64g extends along the entire length of the second body section 64f in a circumferential direction so as to generally follow along the contour of an outer circumferential portion of the counter drive gear G17. The second rearward side rib 64g is arranged rearward of the counter drive gear G 17. The second rearward side rib 64g is formed, for example, as a one-piece integral unit with the first rearward side rib 64c.

The second frontward side rib 64h is arranged on a frontward side edge portion of the second body section 64f such that it protrudes radially inward toward the counter drive gear G17 from the second body section 64f. The second frontward side rib 64h extends along the entire length of the second body section 64f in a circumferential direction so as to generally follow along the contour of an outer circumferential portion of the counter drive gear G 17. The second frontward side rib 64h is formed, for example, as a one-piece integral unit with the first frontward side rib 64d.

The extended section 64 also has three ribs 64i. The ribs 64i are arranged between the first rearward side rib 64c and the first frontward side rib 64d and between the second rearward side rib 64g and the second frontward side rib 64h. The ribs 64i are configured to extend along the entire length of the first extended section 64a and the second extended section 64b in a circumferential direction. A height of the ribs 64i is substantially the same as a height of the first frontward side rib 64d. The first rearward side rib 64c, the first frontward side rib 64d and the ribs 64i function both to increase the strength of the first body section 64e and to organize the flow of lubricating oil between the counter drive gear G 17 and the extended section 64 such that the lubricating oil flows in a rotational (circumferential) direction.

### (2) GUTTER PLATE

The gutter plate 7 (example of a fourth guiding section) is a metal plate-like member arranged below the counter shaft 4 and having a plate body 71 and a guide section 72.

The plate body 71 is a main portion of the gutter plate 7 and is arranged between a bottom portion of the first case 21 and the gears. The guide section 72 and the plate body 71 are formed as a one-piece integral unit and the guide section 72 is arranged to the outside of the third speed counter gear G13 along a radial direction.

The plate body 71 is a metal plate-like member arranged and configured to cover a lower half of the gears and synchronizing mechanism supported on the counter shaft 4. For example, the third speed counter gear G13 and the second synchronizing mechanism S2 face radially toward the plate body 71. The plate body 71 narrows the space located radially outward from the third speed counter gear G13 and the second synchronizing mechanism S2. As a result, the lubricating oil is more readily picked up and propelled upwardly by the third speed counter gear G13 and the second synchronizing mechanism S2.

The guide section 72 is arranged around a periphery of the second collecting section 62a and, together with the plate body 71, serves to guide lubricating oil propelled upwardly by the third counter gear G13 to the second collecting section 62a. More specifically, the guide section 72 has a pair of side walls 72a. The side walls 72a are arranged in positions located axially frontward and axially rearward, respectively, with respect to the third speed counter gear G 13 and configured to extend outward from the plate body 71 in a radial direction. That is, the guide section 72 protrudes radially outward beyond the plate body 71 in a region ranging from a position generally below the third speed counter gear G13 to a position generally to a side of the third speed counter gear G13. Consequently, as shown in Figure 16, the plate body 71 is configured to make it easier for the lubricating oil to be picked up and propelled upwardly in a region from below the counter shaft 4 to a vicinity of the second collecting section 62a, and, in a region near the second collecting section 62a, the guide section 72 serves to guide the picked up lubricating oil to the second collecting section 62a.

Thus, the gutter plate 7 enables the lubricating oil to be guided more readily to the second collecting section 62a when lubricating oil is propelled upwardly due to rotation of the third counter gear G13 and serves to increases the efficiency with which the second collecting section 62a collects the lubricating oil. Even if a force (acceleration) oriented in an axial direction acts on the lubricating oil, the pair of side walls 72a of the guide section 72 restricts movement of the lubricating oil in an axial direction. As a result, it is easier for the second collection section 62a to collect lubricating oil efficiently and stably even when the vehicle is accelerating or decelerating.

### OPERATION OF TRANSMISSION

Operation of the transmission 1 will now be explained with reference to Figure 1.

When the vehicle is driven in the first speed, for example, the first speed main gear G1 and the main shaft 8 are coupled together by the third synchronizing mechanism S3. The power transmitted to the input shaft 3 is transmitted through the main drive gear G7 and the counter drive gear G17 to the counter shaft 4. The power received by the counter shaft 4 is then transmitted through the first speed counter gear G11 and the first speed main gear G1 to the main shaft 8. As a result, the main shaft 8 rotates at a rotational speed corresponding to a gear ratio between the first speed main gear G1 and the first speed counter gear G11.

When the vehicle is driven in the second speed, the second speed main gear G2 and the main shaft 8 are coupled together by the third synchronizing mechanism S3. The power transmitted to the input shaft 3 is transmitted through the main drive gear G7 and the counter drive gear G 17 to the counter shaft 4. The power received by the counter shaft 4 is then transmitted through the second speed counter gear G12 and the second speed main gear G2 to the main shaft 8. As a result, the main shaft 8 rotates at a rotational speed corresponding to a gear ratio between the second speed main gear G2 and the second speed counter gear G12.

When the vehicle is in the first speed or the second speed, the third speed main gear G3 and the third speed counter gear G13 also rotate because the main shaft 8 always rotates. Consequently, when the vehicle is driven in the first speed or the second speed, lubricating oil stored in a bottom portion of the case 2 is propelled upwardly by the third speed counter gear G13.

### BEHAVIOR OF LUBRICATING OIL

When the vehicle is driven in the first speed, the third speed counter gear 13 and the second synchronizing mechanism S2 both rotate and, thus, both pick up lubricating oil. Lubricating oil propelled upwardly by the third speed counter gear G13 is guided to the second speed counter gear G12 and the counter drive gear G 17 by the first guiding section 61 and the second guiding section 62. More specifically, lubricating oil propelled upwardly by the third speed counter gear G13 flows into the first collecting section 61a and the second collecting section 62a.

The lubricating oil that flows into the first collecting section 61 a is guided in an axially frontward direction by the curved section B2, passes through the first middle section 61b, and is discharged from the first discharging section 61c toward the second speed counter gear G12. Since the diagonal section 61d extends diagonally upward, the lubricating oil is discharged from the first discharging section 61c in a diagonally upward direction. As a result, the discharged lubricating oil flows in direction substantially parallel to an outer circumferential portion of the second speed counter gear G12.

The lubricating oil that flows into the second collecting section 62a is changed to an axially frontward flow direction by the curved section B2, is guided by the second middle section 62b to the second discharging section 62c, and is discharged from the second discharging section 62c toward the counter drive gear G17. Since the first extended section 64a of the extended section 64 is arranged to generally follow the contour of an outer circumferential portion of the counter drive gear G17, lubricating oil discharged from the second discharging section 62c flows between the counter drive gear 17 and the first extended section 64a and is propelled upwardly by the counter drive gear G 17. As a result, the lubricating oil discharged from the second discharging section 62c adheres more readily to the counter drive gear G17 and the counter drive gear G17 is lubricated with a higher degree of efficiency. Since lubricating oil propelled upwardly by the third counter gear G13 is guided to the second collecting section 62a by the guide section 72 of the gutter plate 7, the efficiency with which the second collecting section 62a collects lubricating oil is increased.

Since a position where the first collection section 61 a collects lubricating oil is different from a position where the second collecting section 62a collects lubricating oil, a flow rate of the lubricating oil collected by the first collecting section 61 a is different from a flow rate of the lubricating oil collected by the second collecting section 62a. More specifically, due chiefly to the action of centrifugal force, a flow rate of lubricating oil propelled upwardly by the third speed counter gear G13 is faster at positions farther from the rotational axis A2 (positions located more outward along a radial direction) than at positions closer to the rotational axis A2 (positions located more inward along a radial direction). Thus, since the second collecting section 62a is arranged farther outward in a radial direction than the first collecting section 61a, the flow rate of the lubricating oil is faster at the second collecting section 62a than at the first collecting section 61a. As a result, even though the second discharging section 62c is arranged farther from the third speed counter gear G13 than the first discharging section 61c, the lubricating oil collected by the second collecting section 62a can flow to the second discharging section 62c in a reliable fashion.

Lubricating oil that is not collected by the first collecting section 61a and the second collecting section 62a either returns to the bottom portion of the case 2 or adheres to an upper portion of the case 2. A portion of the lubricating oil that adheres to an upper portion of the case 2 drops inside the third collecting section 63a of the third guiding section 63. The lubricating oil collected by the third collecting section 63a is discharged from the third discharging section 63c toward the first speed counter gear G11. As a result, the first speed counter gear G11 is lubricated with a higher degree of efficiency.

Distinctive features of the lubricating apparatus L and the transmission 1 will now be explained.

(1) With this lubricating apparatus L, lubricating oil is supplied to the second speed counter gear G 12 by the first guiding section 61 and to the counter drive gear G 17 by the second guiding section 62. Thus, lubricating oil is supplied to the second speed counter gear G12 and the counter drive gear G17 via separate routes.

Additionally, a flow rate at which lubricating oil is collected by the second collecting section 62a at a given time is faster than a flow rate at which lubricating oil is collected by the first collecting section 61a at the same time. Thus, the lubricating oil collected by the second collecting section 62a flows faster than the lubricating oil collected by the first collecting section 61a.

As a result, with the lubricating apparatus L, a sufficient amount of lubricating oil can be supplied to both the second speed counter gear G12 and the counter drive gear G17 (which is arranged farther away than the second speed counter gear G12) and a stable lubricating performance can be achieved.

(2) Since the first collecting section 61 a and the second collecting section 62a are arranged to the outside of the third speed counter gear G13 and the second synchronizing mechanism S2 with respect to a radial direction, the lubricating oil propelled upwardly by the third speed counter gear G13 flows more readily into the first collecting section 61a and the second collecting section 62a. As a result, a lubricating oil is collected with a higher degree of efficiency and a larger amount of lubricating oil can be supplied to the second speed counter gear G12 and the counter drive gear G17.

Also, the first collecting section 61a and the second collecting section 62a are arranged to the outside of the third speed counter gear G13 and the second synchronizing mechanism S2 with respect to a radial direction, it is not necessary to provide a separate member for picking up the lubricating oil. Consequently, with this lubricating apparatus L, the lubricating performance can be stabilized while preventing the manufacturing cost from increasing.

(3) Since the second collection section 62a is arranged farther from the third speed counter gear G 13 along a radial direction than the first collecting section 61 a, a flow rate of lubricating oil that flows into the second collecting section 62a is faster than a flow rate of lubricating oil that flows into the first collecting section 61a. In other words, the lubricating oil that flows into the second collecting section 62a has more kinetic energy. As a result, the second guiding section 62 can guide the lubricating oil to a farther position and, thus, can reliably guide the lubricating oil to the counter drive gear G17.

(4) The second guiding section 62 is arranged in a position farther from the third speed counter gear G13 in a radial direction than the first guiding section 61. More specifically, the second middle section 62b is arranged in a position farther from the third speed counter gear G13 in a radial direction than the first middle section 61 b. As a result, a simpler structure can be used to guide lubricating oil to the counter drive gear G17, which is arranged farther from the third speed counter gear G13.

(5) Since the first guiding section 61 has a first middle section 61b, lubricating oil collected by the first collecting section 61a can be guided to the first discharging section 61c in a reliable fashion. Since the second guiding section 62 has a second middle section 62b, lubricating oil collected by the second collecting section 62a can be guided to the second discharging section 62c in a reliable fashion. As a result, lubricating oil can be supplied to both the second speed counter gear G12 and the counter drive gear G17 in a reliable fashion.

Furthermore, since the first guiding section 61 is generally sealed, there is substantially no leakage of lubricating oil as it is guided to the first discharging section 61c. Like the first guiding section 61, the second guiding section 62 is also generally sealed. As a result, the lubricating oil collected by the first collecting section 61a and the second collecting section 62a is reliably guided to the first discharging section 61c and the second discharging section 62c.

(6) Since the first collecting section 61 a has a first opening 61 e arranged to face toward (opposite) a direction in which lubricating oil is propelled upwardly by the third speed counter gear G 13 and the second collecting section 62a has a second opening 62e arranged to face toward a direction in which the lubricating oil is propelled upwardly by the third speed counter gear G13, the lubricating oil flows more readily into the first collecting section 61 a and the second collecting section 62a and more of the lubricating oil can be collected.

(7) Since the first collecting section 61 a and the second collecting section 62a are arrange adjacent to each other along a radial direction, the lubricating oil propelled upwardly by the third speed counter gear G13 flows more readily into one or the other of the first collecting section 61 a and the second collecting section 62a and the lubricating oil is collected with a higher degree of efficiency.

(8) A direction changing section D1 configured to change a flow direction of the lubricating oil is realized with the first collecting section 61 a, and a direction changing section D2 configured to change a flow direction of the lubricating oil is realized with the second collecting section 62a. More specifically, the first collecting section 61 a and the second collecting section 62a are configured to change the flow direction of the lubricating oil propelled upwardly by the third speed counter gear G13 to an axial direction of the third speed counter gear G 13. As a result, the kinetic energy of the lubricating oil propelled upwardly by the third speed counter gear G13 can be used to guide the lubricating oil in an axial direction such that the lubricating oil can be supplied to the second speed counter gear G12 and the counter drive gear G17 in a reliable fashion.

(9) If the first collecting section 61 a and the second collecting section 62a were immersed in the lubricating oil, it would be difficult for the lubricating oil to flow into the first collecting section 61a and the second collecting section 62a.

However, in this lubricating apparatus L, the first collecting section 61 a and the second collecting section 62a are arranged in such positions that they are not immersed in the lubricating oil at least when the vehicle is driven in the first speed and when the vehicle is driven in the second speed. As a result, lubricating oil propelled upwardly by the third speed counter gear G13 can be collected efficiently.

(10) The second guiding section 62 has a portion Q provided between the second collecting section 62a and the counter drive gear G17 in which a cross sectional area of a flow path becomes gradually smaller. As a result, an amount by which a flow rate of the lubricating oil decreases can be suppressed and the lubricating oil can be conveyed over a longer distance.

(11) The counter drive gear G17 is arranged in a position that is farther from the third speed counter gear G13 along an axial direction than any other gear. More specifically, the counter drive gear G17 is arranged in a most frontward position of the series of gears. Even if the lubricating oil shifts rearward inside the case 2 such that the counter drive gear G17 is not immersed in the lubricating oil while the vehicle is being driven, lubricating oil can be reliably supplied to the counter drive gear G17 by the second guiding section 62.

Also, since the first discharging section 61c and the second discharging section 62c are configured to change a flow direction of the lubricating oil such that the lubricating oil flows toward the second speed counter gear G12 and the counter drive gear G17, the lubricating oil flowing through the first middle section 61b and the second middle section 62b proceeds smoothly to the second speed counter gear G12 and the counter drive gear G17, respectively.

(12) With this lubricating apparatus L, since the second discharging section 62c of the second guiding section 62 is configured to protrude toward the counter gear G17 so as to be arranged in close proximity to the counter gear G17, lubricating oil discharged from the second discharging section 62c contacts the counter drive gear G17 more readily and is less likely to fall between the counter drive gear G17 and the second discharging section 62c. As a result, the counter drive gear G17 can be lubricated with a higher degree of efficiency and an improved lubricating performance can be obtained.

(13) Since the second guiding section 62 has a first extended section 64a, even if lubricating oil discharged from the second discharging section 62c falls between the second discharging section 62c and the counter drive gear G17, the lubricating oil will be caught by the first extended section 64a and propelled upwardly by the counter drive gear G 17. As a result, the lubricating performance can be improved even further. Also, if lubricating oil falls between the second discharging section 62c and the counter drive gear G17, the lubricating oil will be caught by the first extended section 64a and accumulate between the counter drive gear G17 and the first extended section 64a. The accumulated lubricating oil is propelled upwardly by the counter drive gear G17. Additionally, since the first extended section 64a extends generally along a contour of an outer circumferential portion of the counter drive gear G17, it is more difficult for lubricating oil hitting the counter drive gear G17 to be knocked away. As a result, the lubricating oil can be propelled upwardly and a gear meshing portion can be lubricated efficiently.

(14) Since a gap dimension between the first extended section 64a and the counter drive gear G17 is substantially constant, any lubricating oil that flows into the gap between the first extended section 64a and the counter drive gear G17 can be picked up and propelled upwardly more readily by the counter drive gear G17.

(15) Since a second extended section 64b of the second guiding section 62 is arranged and configured to extend downward from an end portion of the first extended section 64a so as to separate from the counter drive gear G17, lubricating oil existing in a vicinity of the counter drive gear G17 flows readily into a space between the second extended section 64b and the counter drive gear G 17. As a result, the counter drive gear G 17 is lubricated with a higher degree of efficiency.

(16) The first rearward side rib 64c of the first extended section 64a helps prevent lubricating oil from flowing out from between the first extended section 64a and the counter drive gear G17 in a rearward direction. Similarly, the second rearward side rib 64g of the second extended section 64b helps prevent lubricating oil from flowing rearward between the second extended section 64b and the counter drive gear G 17. As a result, the counter drive gear G17 is lubricated with a higher degree of efficiency.

When a rearward force acts on the lubricating oil due to acceleration of the vehicle, the first rearward side rib 64c effectively prevents the lubricating oil from flowing out in a rearward direction from between the first extended section 64a and the counter drive gear G17. Similarly, the second rearward side rib 64g of the second extended section 64b effectively prevents lubricating oil from flowing out in a rearward direction from between the second extended section 64b and the counter drive gear G17.

Additionally, when a rearward force acts on the lubricating oil due to acceleration of the vehicle, the second rearward side wall 62f effectively prevents the lubricating oil discharged from the second discharging section 62c from flowing out in a rearward direction.

(17) The first frontward side rib 64d of the first extended section 64a helps prevent lubricating oil from flowing out from between the first extended section 64a and the counter drive gear G17 in a frontward direction. Similarly, the second frontward side rib 64h of the second extended section 64b helps prevent lubricating oil from flowing out from between the second extended section 64b and the counter drive gear G17 in a frontward direction. As a result, the counter drive gear G17 is lubricated with a higher degree of efficiency.

Also, when a frontward force acts on the lubricating oil due to stopping the vehicle, the first frontward side rib 64d effectively prevents the lubricating oil from flowing out in a frontward direction from between the first extended section 64a and the counter drive gear G17. Similarly, the second frontward side rib 64h of the second extended section 64b effectively prevents lubricating oil from flowing out in a frontward direction from between the second extended section 64b and the counter drive gear G17.

Additionally, when a rearward force acts on the lubricating oil due to acceleration of the vehicle, the rearward side wall 62f effectively prevents the lubricating oil discharged from the second discharging section 62c from flowing out in a rearward direction.

(18) Since the first rearward side rib 64c and the first frontward side rib 64d both span the entire length of the first body section 64e so as to follow generally along a contour of an outer circumferential portion of the counter drive gear G17, it is easier to prevent lubricating oil existing between the first extended section 64a and the counter drive gear G17 from flowing to the outside of the first extended portion 64a and the counter drive gear G17 can be lubricated with a higher degree of efficiency.

(19) The second guiding section 62 is arranged in a position vertically higher than a rotational center of the counter drive gear G17 on a side of the rotational center of the counter drive gear G 17 where an outer circumferential portion of the counter drive gear G 17 moves generally upward. As a result, a region to which the lubricating oil is supplied is closer to a region where lubrication is required (i.e., a portion where the counter drive gear G17 meshes with the main drive gear G7) and it is easier to supply the lubricating oil to the region where lubrication is required. Thus, the lubricating apparatus L can achieve a more stable lubricating performance.

(20) A direction changing section D3 configured to change a flow direction of the lubricating oil is realized with the first discharging section 61 c. The first discharging section 61c discharges lubricating oil generally along a rotation direction of the second speed counter gear G12 (i.e., in a direction that is not opposed to a rotation direction of the second speed counter gear G12). More specifically, the first discharging section 61 c has a diagonal section 61 d configured to extend diagonally upward so as to approach the second speed counter gear G12. The diagonal section 61d causes the lubricating oil to be discharged in a diagonally upward direction, i.e., a direction that is not opposed to the rotational direction of the second speed counter gear G12. As a result, the lubricating oil is discharged in a direction substantially parallel to an outer circumferential portion of the second speed counter gear G12. Thus, the tendency of the lubricating oil to strike the second speed counter gear G12 and scatter can be suppressed and the second speed counter gear G12 can be lubricated with a higher degree of efficiency.

(21) Since the oil gutter 6 has an extended section 64 that is arranged to the outside of the counter drive gear G17 in a radial direction, the spaces between the teeth of the counter drive gear G17 can be used to carry the lubricating oil. As a result, the counter drive gear G 17 can be lubricated with a higher degree of efficiency.

(22) A portion of the lubricating oil propelled upwardly by the third speed counter gear G13 adheres to a side wall and an upper portion of the case 2 without being collected by the first collecting section 61a or the second collecting section 62a. Since the third guiding section 63 is arranged above the first collecting section 61a and the second collecting section 62a, lubricating oil that drips from an upper portion of the case 2 is easily collected by the third guiding section 63. The amount of lubricating oil that drips from above the first collecting section 61a and the second collecting section 62a is comparatively large. Thus, lubricating oil that is collected by the third guiding section 63 is supplied to the first speed counter gear G11.

In this way, providing the third guiding section 63 makes it possible to use the lubricating oil inside the case efficiently with a compact structure.

(23) The third guiding section 63 has a bottom plate C1, which also serves as a portion of the first guiding section 61 and the second guiding section 62. Thus, parts can be shared and the structure can be simplified.

(24) The gutter plate 7 makes it easier to guide lubricating oil propelled upwardly by the third speed counter gear G13 and the second synchronizing mechanism S2 to the second collecting section 62a. Consequently, a larger amount of lubricating oil can be collected by the second collecting section 62a and the amount of lubricating oil supplied to the counter drive gear G17 (which is arranged in a distant position) can be increased. As a result, the second collecting section 62a can collect lubricating oil with a higher degree of efficiency.

(25) Even if a force oriented in an axial direction acts on the lubricating oil, the pair of side walls 72a of the guide section 72 restricts movement of the lubricating oil in an axial direction. As a result, it is easier for the second collection section 62a to collect lubricating oil efficiently and stably even when the vehicle is accelerating or decelerating.

(26) As described previously, a transmission 1 according to this embodiment can achieve a higher lubricating performance because it is equipped with the lubricating apparatus L.

### OTHER EMBODIMENTS

The specific components and structure of the present invention are not limited to those described in the previous embodiment. Various changes and modifications can be made without departing from the scope of the invention as defined in the claims.

In the explanations that follow, parts having substantially the same function as in the previously described embodiment will be assigned the same reference numerals and detailed explanations thereof will be omitted.

(A) The shapes of the oil gutter 6 and the gutter plate 7 are not limited to those of the previous embodiment. For example, the oil gutter 6 can be formed as a one-piece integral unit instead of two separate members, i.e., a holding member B and a lid member C. That is, it is acceptable for the first guiding section 61 to be formed as a one-piece integral unit, for the second guiding section 62 to be formed as a one-piece integral unit, or for the first guiding section 61 and the second guiding section 62 to be formed as a one-piece integral unit.

Conversely, it is also acceptable for the first guiding section 61, the second guiding section 62, and the third guiding section 63 to be formed as separate members. Additionally, it is acceptable for the gutter plate 7 and the oil gutter 6 to be formed as a one-piece integral unit or for only the guide section 72 and the oil gutter 6 to be formed as a one-piece integral unit.

(B) Although the first collecting section 61 a and the second collecting section 62a are arranged adjacent to each other along a radial direction, the positions of the first collecting section 61a and the second collecting section 62a can be offset in a vertical direction or an axial direction (e.g., a longitudinal direction of the vehicle) so long as the positions are such that lubricating oil can be collected.

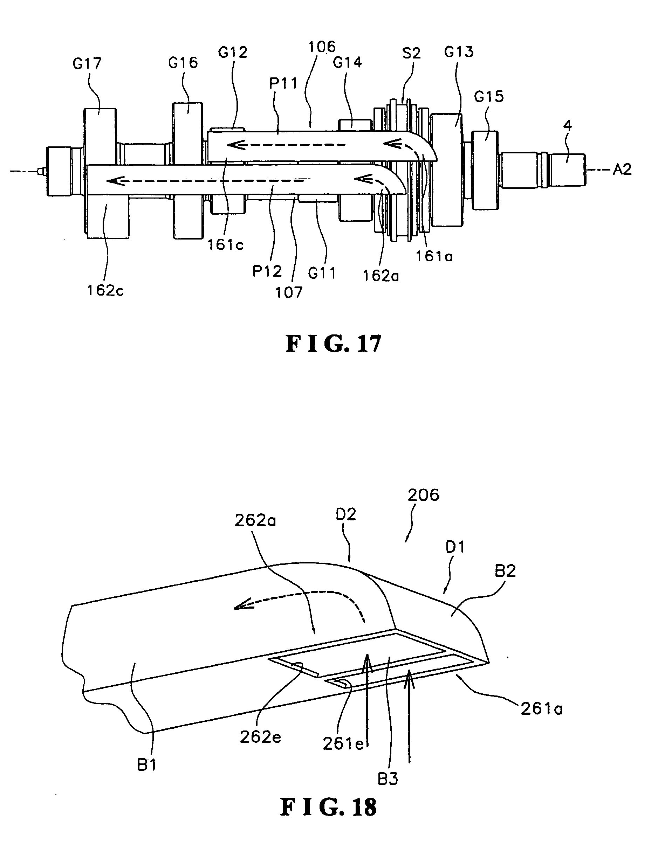

For example, as shown in Figure 17, a first collecting section 161a (corresponding to the previously described first collecting section 61a) can be arranged higher than a second collecting section 162a (corresponding to the previously described second collecting section 62a). In this example, the first collecting section 161a is provided on a first oil gutter 106 and the second collecting section 162a is provided on a second oil gutter 107 that is separate from the first oil gutter 106. The first oil gutter 106 is arranged higher than the second oil gutter 107. Figure 17 shows the first oil gutter 106 and the second oil gutter 107 in a simplified form.

A first flow path P11 (corresponding to the previously described first flow path P1) is formed in the first oil gutter 106, and oil collected by the first collecting section 161a is discharged toward the second speed counter gear G12 from a first discharging section 161 c. A second flow path P 12 (corresponding to the previously described second flow path P2) is formed in the second oil gutter 107, and oil collected by the second collecting section 162a is discharged toward the counter drive gear G17 from a second discharging section 162c. With this configuration, the lubricating performance can be improved similarly to the previously described embodiment.

Although in the previously described embodiment the first opening 61 e of the first collecting section 61a and the second opening 62e of the second collecting section 62a are arranged facing toward a direction in which the lubricating oil is propelled upwardly, the directions in which the first collecting section 61a and the second collecting section 62a are oriented are not limited to the direction described in the previous embodiment.

(C) It is accepted if the member to which the oil gutter 6 supplies lubricating oil is a synchronizing mechanism. In such a case, the synchronizing mechanism can be lubricated with a higher degree of efficiency and the lubricating performance can be stabilized.

(D) Although in the previously described embodiment the members that pick up lubricating oil are the third speed counter gear G13 and the second synchronizing mechanism S2, it is acceptable for the members that pickup lubricating oil to gears only or synchronizing mechanisms only.

(E) Although in the previously described embodiment the first discharging section 61 c has a diagonal section 61d, it is acceptable for the first discharging section 61 c not to have a diagonal section 61d so long as it protrudes from the first middle section 61b so as to be in close proximity to the second speed counter gear G12.

Although in the previously described embodiment the second discharging section 62c has an extended section 64, it is acceptable for the second discharging section 62c not to have an extended section 64 so long as it protrudes from the second middle section 62b so as to be in close proximity to the counter drive gear G17.

The first discharging section 61c is provided with a diagonal section 61d in the previously described embodiment, and it is acceptable for the second discharging section 62c to be configured to have a similar shape to the first discharging section 61 c. Conversely, the second discharging section 62c is provided with an extended section 64 in the previously described embodiment, and it is acceptable for the first discharging section 61c to be provided with a portion having a similar shape to the extended section 64. In other words, it is acceptable for the first discharging section 61 c to have both a diagonal section 61d and an extended section 64, and it is acceptable for the first discharging section 61 c to have an extended section 64 instead of a diagonal section 61d.

(F) It is acceptable for an opening area of the first collecting section 61a and an opening area of the second collecting section 62a to be different. For example, when one or the other of the collecting sections needs to collect a larger amount of lubricating oil or is arranged such that it cannot collect lubricating oil as easily, it is acceptable to make the opening area of that collecting section larger than the opening area of the other collecting section.

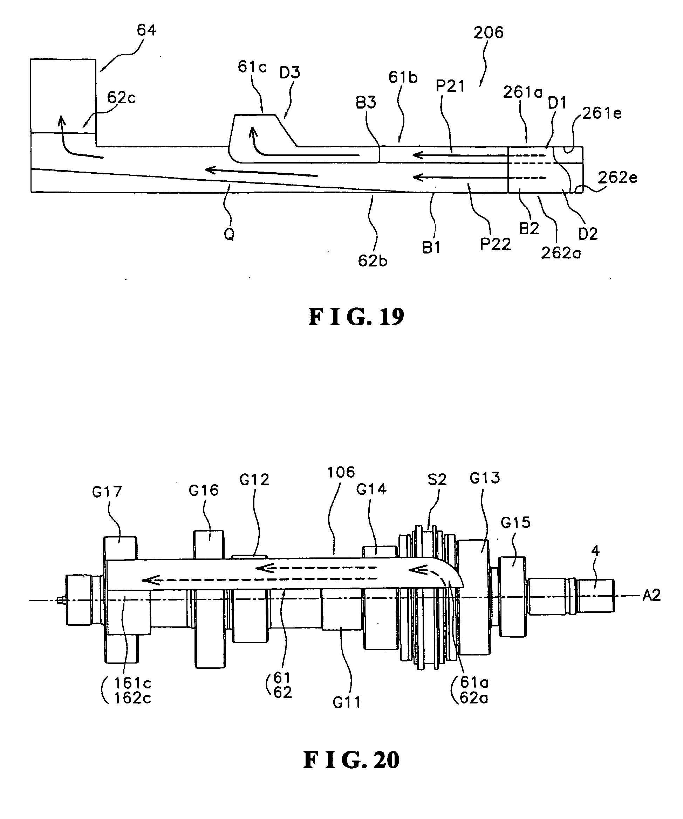

The shapes of the first opening 61 e and the second opening 62e are not limited to the shape presented in the previously described embodiment. Figures 18 and 19 illustrate an example of an oil gutter 206 in which a second opening 262e of a second collecting section 262a (corresponding the previously described second collecting section 62a) has a larger area than a first opening 261e of a first collecting section 261a (corresponding to the previously described first collecting section 61 a). In this example, a cross sectional area of a second flow path P22 (corresponding to the previously described second flow path P2) is larger than a cross sectional area of a first flow path P21 (corresponding to the previously described first flow path P1). With such a configuration, an amount of lubricating oil supplied to the counter drive gear G17 is larger than an amount of lubricating oil supplied to the second speed counter gear G12.

(G) The arrangement of the oil gutter 6 is not limited to the arrangement presented in the previously described embodiment. As shown in Figure 20, for example, it is acceptable for an oil gutter 106 to be configured such that the first guiding section 61 and the second guiding section 62 are arranged higher in a vertical direction than the rotational axis A2. In Figure 20, the oil gutter 106 is depicted in a simplified form.

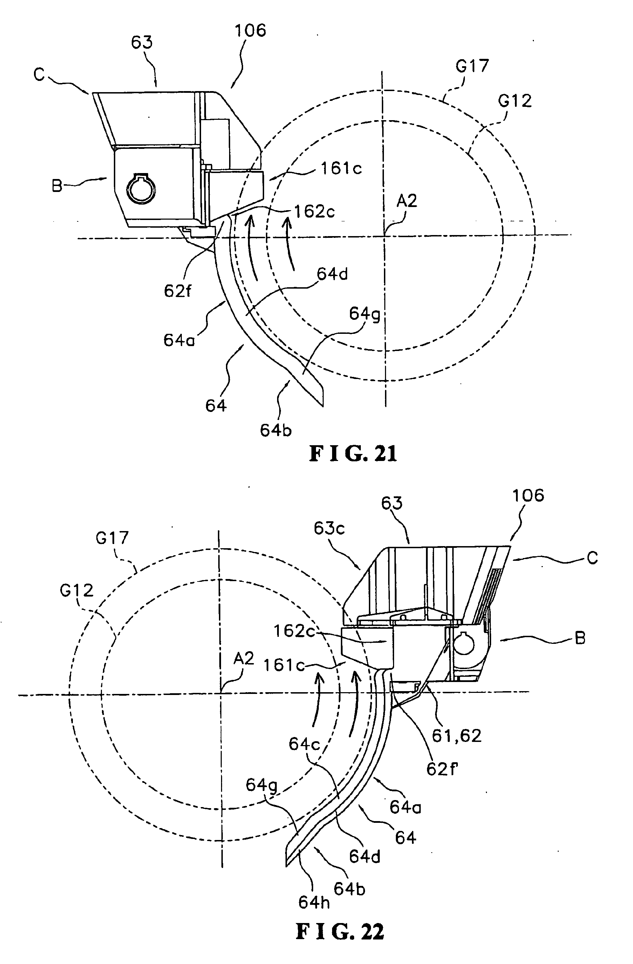

In this example, as shown in Figures 21 and 22, a first discharging section 161 c and a second discharging section 162c are arranged higher than the rotational axis A2. More specifically, the first discharging section 161c is arranged vertically higher than a rotational center (rotational axis A2) of the second speed counter gear G12 on a side of the rotational axis A2 where an outer circumferential portion of the second speed counter gear G 12 moves generally upward. The second discharging section 162c is arranged in a position vertically higher than a rotational center (rotational axis A2) of the counter drive gear G17 on a side of the rotational axis A2 where an outer circumferential portion of the counter drive gear G17 moves generally upward. Since the positions of the first discharging section 161c and the second discharging section 162c are higher than in the previously described embodiment, a portion to which lubricating oil is supplied (lubricant requiring portion) is closer to a portion where the gears mesh (lubricant requiring portion). More specifically, a portion to which the first discharging section 161c supplies lubricating oil is closer to a portion where the second speed counter gear G12 meshes with the second speed main gear G2. Meanwhile, a portion to which the second discharging section 162c supplies lubricating oil is closer to a portion where the counter drive gear G 17 meshes with the main drive gear G7. As a result, the gears can be lubricated with a higher degree of efficiency and the lubricating performance can be stabilized.

Additionally, in this example, the first discharging section 161c is arranged such that it discharges lubricating oil to a location where a velocity vector of an outer circumferential portion of the second speed counter gear G12 points in the direction of a portion where the second speed counter gear G12 meshes with the second speed main gear G2, and the second discharging section 162c is arranged such that it discharges lubricating oil to a location where a velocity vector of an outer circumferential portion of the counter drive gear G17 points in the direction of a portion where the counter drive gear G17 meshes with the main drive gear G7. As a result, lubricating oil can be discharged such that it flows more parallel to the contours of an outer circumferential portion of the second speed counter gear G12 and an outer circumferential portion of the counter drive gear G 17. As a result, the gears can be lubricated with an even higher degree of efficiency.

The arrangement of the oil gutter 6 is not limited to the arrangement presented in the previously described embodiment. For example, it is acceptable for the first guiding section 61 and the second guiding section 62 to be arranged higher in a vertical direction than the rotational axis A2. In such a case, since the positions of the first discharging section 61 c and the second discharging section 62c are higher than in the previously described embodiment, a portion to which lubricating oil is supplied (lubricant requiring portion) is closer to a portion where the gears mesh (lubricant requiring portion). As a result, the gears can be lubricated with a higher degree of efficiency.

(H) It is acceptable for the apparatus to have three or more portions that collect or guide lubricating oil in a manner similar to the first guiding section 61 and the second guiding section 62. For example, it is acceptable to provide a separate guiding section on a radially inward side of the first guiding section 61 (i.e., the opposite side of the first guiding section 61 as the side on which the second guiding section 62 is located), on a radially outward side of the second guiding section 62 (i.e., the opposite side of the second guiding section 62 as the side on which the first guiding section 61 is located), or in a different vertical position than the first guiding section 61 and the second guiding section 62. It is also acceptable for the third guiding section 63 to span across the entirety of the first guiding section 61 and the second guiding section 62. Expanding the third guiding section 63 will increase the lubricating oil collecting performance thereof.

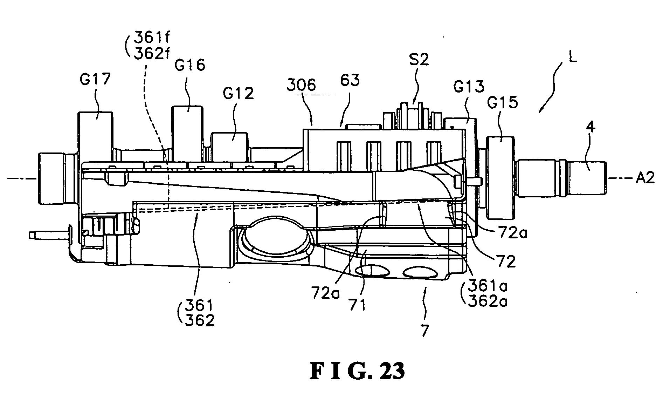

(I) It is acceptable for a bottom surface of the first guiding section 61 and the second guiding section to be slanted. For example, as shown in Figure 23, it is acceptable for an oil gutter 306 to be configured such that a first bottom surface 361f of a first guiding section 361 (corresponds to the previously described first guiding section 61) thereof slants downward with respect to a horizontal plane from the third speed counter gear G13 to the counter drive gear G17. Similarly, it is acceptable for a second bottom surface 362f of a second guiding section 362 (corresponds to the previously described second guiding section 62) to slant downward with respect to a horizontal plane from the third speed counter gear G13 to the second speed counter gear G12. In the oil gutter 306 shown in Figure 23, the slant angle of the first bottom surface 361f is the same as the slant angle of the second bottom surface 362f.

With this configuration, lubricating oil collected by a first collecting section 361a (corresponds to the previously described first col lecting section 61 a) flows readily along the first bottom surface 361f to the counter drive gear G17 due to gravity. Similarly, lubricating oil collected by a second collecting section 362a (corresponds to the previously described second collecting section 62a) flows readily along the second bottom surface 362f to the second speed counter gear G12 due to gravity.

(J) The lubricating apparatus L is not limited to being used in a transmission 1. The present invention can be applied to any device having gears or other members that require lubrication.

A lubricating apparatus according to the above described embodiments enables a lubricating performance to be stabilized. Therefore, the present invention is useful in devices having members that require lubrication.

This lubricating apparatus is configured such that lubricating oil is supplied to the first lubricant requiring member by the first guiding section and lubricating oil is supplied to the second lubricant requiring member by the second guiding section. Thus, lubricating oil is supplied to the first and second lubricant requiring members via separate routes.

Additionally, a flow rate at which lubricating oil is collected by the second collecting section at a given time is faster than a flow rate at which lubricating oil is collected by the first collecting section at the same time. Thus, the lubricating oil collected by the second collecting section flows faster than the lubricating oil collected by the first collecting section.

As a result, with this lubricating apparatus, a sufficient amount of lubricating oil can be supplied to both a first lubricant requiring member and a second lubricant requiring member arranged in a position farther from the rotary member than the first lubricant requiring member, and a stable lubricating performance can be achieved.

With a lubricating apparatus and transmission according to the above described embodiments, a more stable lubricating performance can be achieved.

## Claims

1. A lubricating apparatus (6, 106, 206, 306) for supplying a lubricating oil propelled upwardly by a rotary member (G13, S2) to a first lubricant requiring member (G12) and a second lubricant requiring member (G17) with the second lubricant requiring member (G17) being disposed in a position farther from the rotary member (G13, S2) than the first lubricant requiring member (G12), the lubricating apparatus (6, 106, 206, 306) comprising:
a first guiding section (61, 361) having a first collecting section (61a, 161a, 261 a, 361a) configured and arranged to collect at least a portion of the lubricating oil propelled upwardly by the rotary member (G13, S2), the first guiding section (61, 361) being configured and arranged to deliver the lubricating oil collected by the first collecting section (61a, 161a, 261a, 361a) to the first lubricant requiring member (G12); and
a second guiding section (62, 362) having a second collecting section (62a, 162a, 262a, 362a) configured and arranged to collect at least a portion of the lubricating oil propelled upwardly by the rotary member (G13, S2), the second guiding section (62, 362) being configured and arranged to deliver the lubricating oil collected by the second collecting section (62a, 162a, 262a, 362a) to the second lubricant requiring member (G17),
**characterized in that** the second collecting section (62a, 162a, 262a, 362a) is arranged in a position farther from the rotary member (G13, S2) than the first collecting section (61a, 161a, 261 a, 361a) in a radial direction of the rotary member (G13, S2).

2. The lubricating apparatus (6, 106, 206, 306) recited in claim 1, wherein
the first collecting section (161a) is arranged higher than the second collecting section (162a).

3. The lubricating apparatus (6, 106, 206, 306) recited in claim 1 or 2, wherein
the first guiding section (61, 361) has a first discharging section (61 c, 161c) configured and arranged to discharge the lubricating oil collected by the first collecting section (61a, 161a, 261 a, 361a) toward the first lubricant requiring member (G12); and
the second guiding section (62, 362) has a second discharging section (62c, 162c) configured and arranged to discharge the lubricating oil collected by the second collecting section (62a, 162a, 262a, 362a) toward the second lubricant requiring member (G17).

4. The lubricating apparatus (6, 106, 206, 306) recited in any one of claims 1 to 3, wherein
at least one of the first and second guiding sections (61 and 62, 361 and 362) has a direction changing section (61a, 61c, 62a or 62c; 161 a, 161c, 162a or 162c; 261a or 262a; 361a or 362a) configured and arranged to change a flow direction of the lubricating oil propelled upwardly by the rotary member (G13, S2) with the direction changing section (61 a, 61 c, 62a or 62c; 161a, 161c, 162a or 162c; 261a or 262a; 361a or 362a) being generally sealed.

5. The lubricating apparatus (6, 106, 206, 306) recited in any one of claims 1 to 4, wherein
the first and second collecting sections (61a and 62a, 161a and 162a, 261a and 262a, 361a and 362a) are arranged in such positions that they are not immersed in the lubricating oil.

6. The lubricating apparatus (6, 106, 206, 306) recited in any one of claims 3 to 5, wherein
at least one of the first and second discharging sections (61c and 62c, 161c and 162c) protrudes from a corresponding one of the first and second guiding sections (61 and 62, 361 and 362) toward a corresponding one of the first and second lubricant requiring members (G12 and G17) so as to be in close proximity to the corresponding one of the first and second lubricant requiring members (G12 and G17).

7. The lubricating apparatus (6, 106, 206, 306) recited in any one of claims 3 to 6, wherein
at least one of the first and second discharging sections (61 c and 62c, 161c and 162c) is configured and arranged to discharge the lubricating oil generally along a rotation direction of a corresponding one of the first and second lubricant requiring members (G12 and G17).

8. The lubricating apparatus (6, 106, 206, 306) recited in any one of claims 2 to 7, wherein
at least one of the first and second discharging sections (61 c and 62c, 161c and 162c) has a diagonal section (61d) extending diagonally upward so as to approach a corresponding one of the first and second lubricant requiring members (G12 and G17).

9. The lubricating apparatus (6, 106, 206, 306) recited in any one of claims 3 to 8, wherein
at least one of the first and second discharging sections (61c and 62c, 161c and 162c) is arranged higher than a rotational center of a corresponding one of the first and second lubricant requiring members (G12 and G17) with respect to a vertical direction on a side of the corresponding one of the first and second lubricant requiring members (G12 and G17) where an outer circumferential portion of the corresponding one of the first and second lubricant requiring members (G12 and G17) moves generally upward with respect to the rotational center.

10. The lubricating apparatus (6, 106, 206, 306) recited in any one of claims 1 to 9, wherein
the second guiding section (62, 362) is configured and arranged to deliver the lubricating oil to the second lubricant requiring member (G17) that is arranged in a position farthest from the rotary member (G13, S2) among a plurality of lubricant requiring members disposed along an axial direction of the rotary member (G13, S2).

11. The lubricating apparatus (6, 106, 206, 306) recited in any one of claims 3 to 10, wherein
the second guiding section (62, 362) has a first extended section (64a) extending downward from an end portion of the second discharging section (62c) along an outer circumferential portion of the second lubricant requiring member (G17).

12. The lubricating apparatus (6, 106, 206, 306) recited in claim 11, wherein
the first extended section (64a) is configured and arranged such that a gap dimension between the first extended section (64a) and the second lubricant requiring member (G17) is substantially constant.

13. The lubricating apparatus (6, 106, 206, 306) recited in claim 11 or 12,
wherein
the second guiding section (62, 362) has a second extended section (64b) extending diagonally downward from an end portion of the first extended section (64a) so as to gradually separate from the second lubricant requiring member (G17).

14. The lubricating apparatus (6, 106, 206, 306) recited in any one of claims 1 to 13, further comprising
a third guiding section (63) arranged generally above the first and second collecting sections (61a and 62a, 161a and 162a, 261a and 262a, 361a and 362a), and configured and arranged to collect lubricating oil that runs along and drips from a case (2) and deliver the lubricating oil to a third lubricant requiring member (G11).

15. The lubricating apparatus (6, 106, 206, 306) recited in any one of claims 1 to 14, further comprising
a fourth guiding section (7) arranged in a position located radially outward from the rotary member (G13, S2), and configured and arranged to guide lubricating oil propelled upwardly by the rotary member (G13, S2) to the second collecting section (62a, 162a, 262a, 362a).

## Patentansprüche

1. Schmiervorrichtung (6, 106, 206, 306) zum Zuführen eines Schmieröls, das von einem Drehelement (G13, S2) nach oben zu einem ersten Schmiermittel erfordernden Element (G12) und einem zweiten Schmiermittel erfordernden Element (G17) getrieben wird, wobei das zweite Schmiermittel erfordernde Element (G17) an einer weiter vom Drehelement (G13, S2) entfernten Position als das erste Schmiermittel erfordernde Element (G12) angeordnet ist, wobei die Schmiervorrichtung (6, 106, 206, 306) umfasst:
einen ersten Führungsabschnitt (61, 361) mit einem ersten Sammelabschnitt (61 a, 161 a, 261 a, 361 a), der zum Sammeln zumindest eines Teils des vom Drehelement (G13, S2) nach oben getriebenen Schmieröls konfiguriert und eingerichtet ist, wobei der erste Führungsabschnitt (61, 361) konfiguriert und eingerichtet ist, um das vom ersten Sammelabschnitt (61 a, 161 a, 261 a, 361 a) gesammelte Schmieröl zum ersten Schmieröl erfordernden Element (G12) zu fördern; und
einen zweiten Führungsabschnitt (62, 362) mit einem zweiten Sammelabschnitt (62a, 162a, 262a, 362a), der zum Sammeln zumindest eines Teils des vom Drehelement (G13, S2) nach oben getriebenen Schmieröls konfiguriert und eingerichtet ist , wobei der zweite Führungsabschnitt (62, 362) konfiguriert und eingerichtet ist, um das vom zweiten Sammelabschnitt (62a, 162a, 262a, 362a) gesammelte Schmieröl zum zweiten Schmieröl erfordernden Element (G17) zu fördern,
**dadurch gekennzeichnet, dass** der zweite Sammelabschnitt (62a, 162a, 262a, 362a) in radialer Richtung des Drehelements (G13, S2) an einer weiter vom Drehelement (G13, S2) entfernten Position als der erste Sammelabschnitt (61 a, 161 a, 261 a, 361 a) angeordnet ist.

2. Schmiervorrichtung (6, 106, 206, 306) nach Anspruch 1, wobei
der erste Sammelabschnitt (161a) höher als der zweite Sammelabschnitt (162a) angeordnet ist.

3. Schmiervorrichtung (6, 106, 206, 306) nach Anspruch 1 oder 2, wobei
der erste Führungsabschnitt (61, 361) einen ersten Ausstoßabschnitt (61 c, 161 c) aufweist, der zum Ausstoßen des vom ersten Sammelabschnitt (61 a, 161 a, 261 a, 361 a) gesammelten Schmieröls zum ersten Schmieröl erfordernden Element (G12) konfiguriert und eingerichtet ist; und
der zweite Führungsabschnitt (62, 362) einen zweiten Ausstoßabschnitt (62c, 162c) aufweist, der zum Ausstoßen des vom zweiten Sammelabschnitt (62a, 162a, 262a, 362a) gesammelten Schmieröls zum zweiten Schmieröl erfordernden Element (G17) konfiguriert und eingerichtet ist.

4. Schmiervorrichtung (6, 106, 206, 306) nach einem der Ansprüche 1 bis 3, wobei
zumindest einer der ersten und zweiten Führungsabschnitte (61 und 62, 361 und 362) einen Richtungsänderungsabschnitt (61 a, 61 c, 62a oder 62c; 161 a, 161 c, 162a oder 162c; 261 a oder 262a; 361 a oder 362a) aufweist, der zum Ändern einer Strömungsrichtung des vom Drehelement (G13, S2) nach oben getriebenen Schmieröls konfiguriert und eingerichtet ist, wobei der Richtungsänderungsabschnitt (61 a, 61 c, 62a oder 62c; 161 a, 161 c, 162a oder 162c; 261 a oder 262a; 361 a oder 362a) im Wesentlichen abgedichtet ist.

5. Schmiervorrichtung (6, 106, 206, 306) nach einem der Ansprüche 1 bis 4, wobei
die ersten und zweiten Sammelabschnitte (61 a und 62a, 161 a und 162a, 261 a und 262a, 361 a und 362a) an solchen Positionen angeordnet sind, dass sie im Schmieröl nicht eingetaucht sind.

6. Schmiervorrichtung (6, 106, 206, 306) nach einem der Ansprüche 3 bis 5, wobei
zumindest einer der ersten und zweiten Ausstoßabschnitte (61 c und 62c, 161 c und 162c) von einem entsprechenden der ersten und zweiten Führungsabschnitte (61 und 62, 361 und 362) zu einem entsprechenden der ersten und zweiten Schmieröl erfordernden Elemente (G12 und G17) herausragt, um sich in unmittelbarer Nähe zum entsprechenden der ersten und zweiten Schmieröl erfordernden Elemente (G12 und G17) zu befinden.

7. Schmiervorrichtung (6, 106, 206, 306) nach einem der Ansprüche 3 bis 6, wobei
zumindest einer der ersten und zweiten Ausstoßabschnitte (61 c und 62c, 161 c und 162c) konfiguriert und eingerichtet ist, um das Schmieröl im Wesentlichen entlang einer Drehrichtung eines entsprechenden der ersten und zweiten Schmieröl erfordernden Elemente (G12 und G17) auszustoßen.

8. Schmiervorrichtung (6, 106, 206, 306) nach einem der Ansprüche 2 bis 7, wobei
zumindest einer der ersten und zweiten Ausstoßabschnitte (61 c und 62c, 161c und 162c) einen diagonalen Abschnitt (61 d) aufweist, der sich diagonal nach oben erstreckt, um sich einem entsprechenden der ersten und zweiten Schmieröl erfordernden Elemente (G12 und G17) anzunähern.

9. Schmiervorrichtung (6, 106, 206, 306) nach einem der Ansprüche 3 bis 8, wobei
zumindest einer der ersten und zweiten Ausstoßabschnitte (61 c und 62c, 161 c und 162c) in Bezug auf eine vertikale Richtung höher als ein Drehmittelpunkt eines entsprechenden der ersten und zweiten Schmieröl erfordernden Elemente (G12 und G17) auf einer Seite des entsprechenden der ersten und zweiten Schmieröl erfordernden Elemente (G12 und G17) angeordnet ist, wo ein Außenumfangsbereich des entsprechenden der ersten und zweiten Schmieröl erfordernden Elemente (G12 und G17) sich in Bezug auf den Drehmittelpunkt im Wesentlichen nach oben bewegt.

10. Schmiervorrichtung (6, 106, 206, 306) nach einem der Ansprüche 1 bis 9, wobei
der zweite Führungsabschnitt (62, 362) eingerichtet und angeordnet ist, um das Schmieröl zum zweiten Schmieröl erfordernden Element (G17) zu fördern, das aus einer Mehrzahl von Schmieröl erfordernden Elementen an einer am weitesten entfernten Position vom Drehelement (G13, S2) längs einer axialen Richtung des Drehelements (G13, S2) angeordnet ist.

11. Schmiervorrichtung (6, 106, 206, 306) nach einem der Ansprüche 3 bis 10, wobei
der zweite Führungsabschnitt (62, 362) einen ersten verlängerten Abschnitt (64a) aufweist, der sich von einem Endbereich des zweiten Ausstoßabschnitts (62c) entlang eines Außenumfangsbereichs des zweiten Schmieröl erfordernden Elements (G17) nach unten verlängert.

12. Schmiervorrichtung (6, 106, 206, 306) nach Anspruch 11, wobei
der erste verlängerte Abschnitt (64a) eingerichtet und angeordnet ist, so dass ein Abstandsmaß zwischen dem ersten verlängerten Abschnitt (64a) und dem zweiten Schmieröl erfordernden Element (G17) im Wesentlichen konstant ist.

13. Schmiervorrichtung (6, 106, 206, 306) nach Anspruch 11 oder 12, wobei der zweite Führungsabschnitt (62, 362) einen zweiten verlängerten Bereich (64b) aufweist, der sich von einem Endbereich des ersten verlängerten Abschnitts (64a) diagonal nach unten verlängert, um vom zweiten Schmieröl erfordernden Element (G17) schrittweise zu entfernen.

14. Schmiervorrichtung (6, 106, 206, 306) nach einem der Ansprüche 1 bis 13, ferner umfassend
einen dritten Führungsabschnitt (63), der im Wesentlichen oberhalb der ersten und zweiten Sammelabschnitte (61 a und 62a, 161 a und 162a, 261 a und 262a, 361 a und 362a) angeordnet ist und konfiguriert und eingerichtet ist, um das Schmieröl zu sammeln, das entlang eines und von einem Gehäuse (2) tropft und das Schmieröl zu einem dritten Schmieröl erfordernden Element (G11) zu fördern.

15. Schmiervorrichtung (6, 106, 206, 306) nach einem der Ansprüche 1 bis 14, ferner umfassend
einen vierten Führungsabschnitt (7), der an einer radial außerhalb des Drehelements (G13, S2) liegenden Position angeordnet ist und konfiguriert und eingerichtet ist, um das vom Drehelement (G13, S2) nach oben getriebene Schmieröl zum zweiten Sammelabschnitt (62a, 162a, 262a, 362a) zu führen.

## Revendications

1. Dispositif de lubrification (6, 106, 206, 306) pour fournir une huile lubrifiante propulsée vers le haut par un élément rotatif (G13, S2) à un premier élément nécessitant du lubrifiant (G12) et un deuxième élément nécessitant du lubrifiant (G17), le deuxième élément nécessitant du lubrifiant (G17) étant disposé dans une position plus éloignée de l'élément rotatif (G13, S2) que le premier élément nécessitant du lubrifiant (G12), le dispositif de lubrification (6, 106, 206, 306) comprenant :
une première section de guidage (61, 361) présentant une première section collectrice (61 a, 161 a, 261 a, 361 a) configurée et agencée pour collecter au moins une partie de l'huile lubrifiante propulsée vers le haut par l'élément rotatif (G13, S2), la première section de guidage (61, 361) étant configurée et agencée pour distribuer l'huile lubrifiante collectée par la première section collectrice (61 a, 161 a, 261 a, 361 a) au premier élément nécessitant du lubrifiant (G12) ; et
une deuxième section de guidage (62, 362) présentant une deuxième section collectrice (62a, 162a, 262a, 362a) configurée et agencée pour collecter au moins une partie de l'huile lubrifiante propulsée vers le haut par l'élément rotatif (G13, S2), la deuxième section de guidage (62, 362) étant configurée et agencée pour distribuer l'huile lubrifiante collectée par la deuxième section collectrice (62a, 162a, 262a, 362a) au deuxième élément nécessitant du lubrifiant (G17),
**caractérisé en ce que** la deuxième section collectrice (62a, 162a, 262a, 362a) est agencée dans une position plus éloignée de l'élément rotatif (G13, S2) que la première section collectrice (61 a, 161 a, 261 a, 361 a) dans une direction radiale de l'élément rotatif (G13, S2).

2. Dispositif de lubrification (6, 106, 206, 306) selon la revendication 1, dans lequel
la première section collectrice (161a) est agencée plus haut que la deuxième section collectrice (162a).

3. Dispositif de lubrification (6, 106, 206, 306) selon la revendication 1 ou 2, dans lequel
la première section de guidage (61, 361) présente une première section de déversement (61 c, 161c) configurée et agencée pour déverser l'huile lubrifiante collectée par la première section collectrice (61 a, 161 a, 261 a, 361 a) en direction du premier élément nécessitant du lubrifiant (G12) ; et
la deuxième section de guidage (62, 362) présente une deuxième section de déversement (62c, 162c) configurée et agencée pour déverser l'huile lubrifiante collectée par la deuxième section collectrice (62a, 162a, 262a, 362a) en direction du deuxième élément nécessitant du lubrifiant (G17).

4. Dispositif de lubrification (6, 106, 206, 306) selon l'une quelconque des revendications 1 à 3, dans lequel
au moins l'une des première et deuxième sections de guidage (61 et 62, 361 et 362) présente une section de changement de direction (61 a, 61 c, 62a ou 62c ; 161 a, 161 c, 162a ou 162c ; 261 a ou 262a ; 361 a ou 362a) configurée et agencée pour changer une direction d'écoulement de l'huile lubrifiante propulsée vers le haut par l'élément rotatif (G13, S2), la section de changement de direction (61 a, 61 c, 62a ou 62c ; 161 a, 161 c, 162a ou 162c ; 261 a ou 262a ; 361 a ou 362a) étant en général scellée.

5. Dispositif de lubrification (6, 106, 206, 306) selon l'une quelconque des revendications 1 à 4, dans lequel
les première et deuxième sections collectrices (61 a et 62a, 161 a et 162a, 261 a et 262a, 361 a et 362a) sont agencées dans des positions telles qu'elles ne sont pas immergées dans l'huile lubrifiante.

6. Dispositif de lubrification (6, 106, 206, 306) selon l'une quelconque des revendications 3 à 5, dans lequel
au moins l'une des première et deuxième sections de déversement (61 c et 62c, 161c et 162c) fait saillie à partir d'une section correspondante parmi les première et deuxième sections de guidage (61 et 62, 361 et 362) en direction d'un élément correspondant parmi les premier et deuxième éléments nécessitant du lubrifiant (G12 et G17) de façon à se trouver à proximité immédiate de l'élément correspondant des premier et deuxième éléments nécessitant du lubrifiant (G12 et G17).

7. Dispositif de lubrification (6, 106, 206, 306) selon l'une quelconque des revendications 3 à 6, dans lequel
au moins l'une des première et deuxième sections de déversement (61 c et 62c, 161c et 162c) est configurée et agencée pour déverser l'huile lubrifiante généralement suivant une direction de rotation d'un élément correspondant des premier et deuxième éléments nécessitant du lubrifiant (G12 et G17).

8. Dispositif de lubrification (6, 106, 206, 306) selon l'une quelconque des revendications 2 à 7, dans lequel
au moins l'une des première et deuxième sections de déversement (61 c et 62c, 161 c et 162c) présente une section diagonale (61 d) s'étendant en diagonale vers le haut de façon à s'approcher d'un élément correspondant des premier et deuxième éléments nécessitant du lubrifiant (G12 et G17).

9. Dispositif de lubrification (6, 106, 206, 306) selon l'une quelconque des revendications 3 à 8, dans lequel
au moins l'une des première et deuxième sections de décharge (61 c et 62c, 161c et 162c) est agencée plus haut qu'un centre de rotation d'un élément correspondant des premier et deuxième éléments nécessitant du lubrifiant (G12 et G17) par rapport à une direction verticale sur un côté de l'élément correspondant des premier et deuxième éléments nécessitant du lubrifiant (G12 et G17), dans lequel une partie circonférentielle extérieure de l'élément correspondant des premier et deuxième éléments nécessitant du lubrifiant (G12 et G17) remonte en général par rapport au centre de rotation.

10. Dispositif de lubrification (6, 106, 206, 306) selon l'une quelconque des revendications 1 à 9, dans lequel
la deuxième section de guidage (62, 362) est configurée et agencée pour distribuer l'huile lubrifiante au deuxième élément nécessitant du lubrifiant (G17) qui est agencé dans la position la plus éloignée de l'élément rotatif (G13, S2) parmi une pluralité d'éléments nécessitant du lubrifiant disposés le long d'une direction axiale de l'élément rotatif (G13, S2).

11. Dispositif de lubrification (6, 106, 206, 306) selon l'une quelconque des revendications 3 à 10, dans lequel
la deuxième section de guidage (62, 362) présente une première section étendue (64a) s'étendant vers le bas à partir d'une partie d'extrémité de la deuxième section de déversement (62c) le long d'une partie circonférentielle extérieure du deuxième élément nécessitant du lubrifiant (G17).

12. Dispositif de lubrification (6, 106, 206, 306) selon la revendication 11, dans lequel
la première section étendue (64a) est configurée et agencée de telle sorte qu'une dimension d'intervalle entre la première section étendue (64a) et le deuxième élément nécessitant du lubrifiant (G17) est substantiellement constante.

13. Dispositif de lubrification (6, 106, 206, 306) selon la revendication 11 ou 12, dans lequel
la deuxième section de guidage (62, 362) présente une deuxième section étendue (64b) s'étendant en diagonale vers le bas à partir d'une partie d'extrémité de la première section étendue (64a) de façon à se séparer progressivement du deuxième élément nécessitant du lubrifiant (G17).

14. Dispositif de lubrification (6, 106, 206, 306) selon l'une quelconque des revendications 1 à 13, comprenant en outre
une troisième section de guidage (63) agencée en général au-dessus des première et deuxième sections collectrices (61 a et 62a, 161 a et 162a, 261 a et 262a, 361 a et 362a), et configurée et agencée pour collecter l'huile lubrifiante coulant le long et ruisselant d'un carter (2) et pour distribuer l'huile lubrifiante à un troisième élément nécessitant du lubrifiant (G11).

15. Dispositif de lubrification (6, 106, 206, 306) selon l'une quelconque des revendications 1 à 14, comprenant en outre
une quatrième section de guidage (7) agencée dans une position située radialement vers l'extérieur par rapport à l'élément rotatif (G13, S2) et configurée et agencée pour guider l'huile lubrifiante propulsée vers le haut par l'élément rotatif (G13, S2) jusqu'à la deuxième section collectrice (62a, 162a, 262a, 362a).
